# EUROPEAN PATENT APPLICATION

(11) **EP 3 540 735 A1**
(43) Date of publication of application: **18.09.2019**
(21) Application number: 18162154.1
(22) Date of filing: 16.03.2018
(51) Int. Cl.: G11B 20/10, G06F 3/16, G11B 27/031, G11B 27/036, G11B 27/10, H04N 5/77, H04N 9/82, H04R 1/40, H04R 3/00, H04S 7/00

(54) **SPATIAL AUDIO PROCESSING**

(71) Applicant: Nokia Technologies Oy, 02610 Espoo (FI)
(72) Inventor: PETÄINEN, Katriina, 36200 Kangasala (FI); LILJEROOS, Ari-Pekka, 33960 Pirkkala (FI)
(74) Representative: Nokia EPO representatives

(57) **Abstract**

According to an example embodiment, a method is provided, the method comprising obtaining a position indication for a user device comprising an imaging device, wherein the position indication indicates a location and orientation of the imaging device; receiving at least one audio source data comprising an audio source signal and a corresponding audio source location indication; generating a spatial audio stream based on the position indication and the at least one audio source data; recording a video stream using the imaging device; and combining the spatial audio stream with the video stream.

## Description

### TECHNICAL FIELD

The example and non-limiting embodiments of the present invention relate to provision of audio-visual content that includes a spatial audio stream.

### BACKGROUND

Many mobile user devices, such as smartphones, video cameras, multimedia player devices, tablet computers, etc. include audio capturing means for recording audio streams in the environment of the user device and video capturing means for recording video streams that enable recording video streams in the environment of the user device. Such a mobile user device typically further provides a user-operable media capturing application that may be applied to control the audio capturing means and the video capturing means to simultaneously capture, respectively, an audio stream and a video stream and provides the captured streams as a time synchronized audio-visual stream. The audio-visual stream may be stored at the user device for subsequent viewing and/or it may be transmitted or streamed to another device for viewing therein.

Due to advances in imaging technology such a mobile user device is typically provided with video capturing means that enables also non-professional users to conveniently record relatively high-quality video streams, even when a target of interest is relatively far from the user. On the other hand, while modern audio capturing means likewise enable recording of high-quality audio streams that represent sounds originating from the target of interest, in practical conditions the resulting audio quality is in many cases less than acceptable due to undesired environmental noises, especially in scenarios where the target of interest is relatively far from the user device.

### SUMMARY

According to an example embodiment, a method is provided, the method comprising obtaining a position indication for a user device comprising an imaging device, wherein the position indication indicates a location and orientation of the imaging device; receiving at least one audio source data comprising an audio source signal and a corresponding audio source location indication; generating a spatial audio stream based on the position indication and the at least one audio source data; recording a video stream using the imaging device; and combining the spatial audio stream with the video stream.

According to another example embodiment, a method is provided, the method comprising deriving a position indication for a user device comprising an imaging device, wherein the position indication indicates a location and orientation of the imaging device; transmitting the position indication to a server device; receiving, from the server device, a spatial audio stream derived at least in part based on the position indication; recording a video stream using the imaging device; and combining the received spatial audio stream with the video stream.

According to another example embodiment, a method is provided, the method comprising deriving a position indication for a user device comprising an imaging device, wherein the position indication indicates a location and orientation of the imaging device; receiving, from the server device, a multi-channel audio stream that comprises, for at least one audio source, a respective audio source signal and a corresponding audio source location indication; generating a spatial audio stream based on the position indication and the received multi-channel audio stream; and recording a video stream using the imaging device and combining the generated spatial audio stream with the video stream.

According to another example embodiment, a system is provided, the system comprising means for obtaining a position indication for a user device comprising an imaging device, wherein the position indication indicates a location and orientation of the imaging device; means for receiving at least one audio source data comprising an audio source signal and a corresponding audio source location indication; means for generating a spatial audio stream based on the position indication and the at least one audio source data; means for recording a video stream using the imaging device; and means for combining the spatial audio stream with the video stream.

According to another example embodiment, an apparatus is provided, the apparatus comprising an imaging device and means for deriving a position indication for the apparatus, wherein the position indication indicates a location and orientation of the imaging device; means for transmitting the position indication to a server device; means for receiving, from the server device, a spatial audio stream derived at least in part based on the position indication; means for recording a video stream using the imaging device; and means for combining the received spatial audio stream with the video stream.

According to another example embodiment, an apparatus is provided, the apparatus comprising an imaging device and means for deriving a position indication for the apparatus, wherein the position indication indicates a location and orientation of the imaging device; means for receiving, from the server device, a multi-channel audio stream that comprises, for at least one audio source, a respective audio source signal and a corresponding audio source location indication; means for generating a spatial audio stream based on the position indication and the received multi-channel audio stream; means for recording a video stream using the imaging device; and means for combining the generated spatial audio stream with the video stream.

According to another example embodiment, an apparatus comprising an imaging device is provided, the apparatus configured to: derive a position indication for the apparatus, wherein the position indication indicates a location and orientation of the imaging device; transmit the position indication to a server device; receive, from the server device, a spatial audio stream derived at least in part based on the position indication; record a video stream using the imaging device; and combine the received spatial audio stream with the video stream.

According to another example embodiment, an apparatus comprising an imaging device is provided, the apparatus configured to: derive a position indication for the apparatus, wherein the position indication indicates a location and orientation of the imaging device; receive, from the server device, a multi-channel audio stream that comprises, for at least one audio source, a respective audio source signal and a corresponding audio source location indication; generate a spatial audio stream based on the position indication and the received multi-channel audio stream; record a video stream using the imaging device; and combine the generated spatial audio stream with the video stream.

According to another example embodiment, an apparatus comprising an imaging device is provided, wherein the apparatus comprises at least one processor; and at least one memory including computer program code, which when executed by the at least one processor, causes the apparatus to: derive a position indication for the apparatus, wherein the position indication indicates a location and orientation of the imaging device; transmit the position indication to a server device; receive, from the server device, a spatial audio stream derived at least in part based on the position indication; record a video stream using the imaging device; and combine the received spatial audio stream with the video stream.

According to another example embodiment, an apparatus comprising an imaging device is provided, wherein the apparatus comprises at least one processor; and at least one memory including computer program code, which when executed by the at least one processor, causes the apparatus to: derive a position indication for the apparatus, wherein the position indication indicates a location and orientation of the imaging device; receive, from the server device, a multi-channel audio stream that comprises, for at least one audio source, a respective audio source signal and a corresponding audio source location indication; generate a spatial audio stream based on the position indication and the received multi-channel audio stream; record a video stream using the imaging device; and combine the generated spatial audio stream with the video stream.

According to another example embodiment, a computer program is provided, the computer program comprising computer readable program code configured to cause performing at least a method according to the example embodiment described in the foregoing when said program code is executed on a computing apparatus.

The computer program according to an example embodiment may be embodied on a volatile or a non-volatile computer-readable record medium, for example as a computer program product comprising at least one computer readable non-transitory medium having program code stored thereon, the program which when executed by an apparatus cause the apparatus at least to perform the operations described hereinbefore for the computer program according to an example embodiment of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
FIG. 1 illustrates a block diagram of some components of an audio/video recording arrangement 100 according to an example
FIG. 2 illustrates a flowchart depicting a method according to an example;
FIG. 3A illustrates a flowchart depicting a method according to an example;
FIG. 3B illustrates a flowchart depicting a method according to an example;
FIG. 4A illustrates a flowchart depicting a method according to an example;
FIG. 4B illustrates a flowchart depicting a method according to an example;
FIGS. 5A to 5D illustrate a visual component of a user interface according to an example; and
FIG. 6 illustrates a block diagram of some elements of an apparatus according to an example.

### DESCRIPTION OF SOME EMBODIMENTS

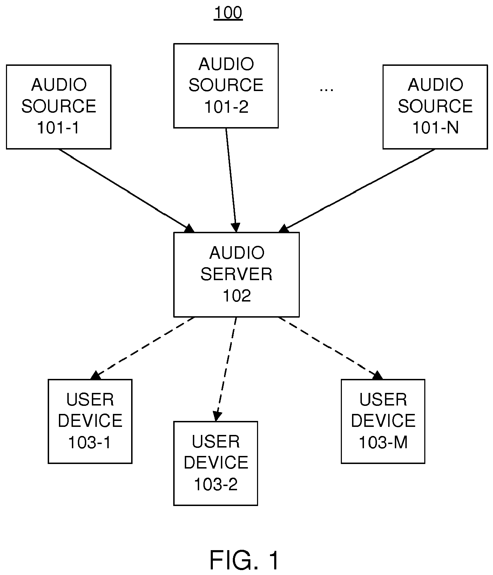

FIG. 1 illustrates an example block diagram of some components of an audio/video recording arrangement 100. In this regard, FIG. 1 depicts audio sources 101-1, 101-2 and 101-N arranged to provide respective audio sources signals to an audio server 102, which provides the audio source signals in a respective audio stream to (mobile) user devices 103-1, 103-2 and 103-M. The example of FIG. 1 suggests N audio sources and M user devices, whereas in general the audio/visual recording arrangement involves one or more audio sources 101 and one or more user devices 103. In the following, an individual audio source of the one or more audio sources 101 may be referred to as an audio source 101-n. Along similar lines, an individual user device of the one or more user devices 103 may be referred to as a user device 103-m. The audio server 102 represents a logical entity that may be provided, for example, by one or more server devices.

Each of the one or more audio sources 101 is arranged in respective desired positions at or in proximity of a target location. The term 'target location' as used herein refers to a location where sound sources of interest may be captured by the one or more audio sources 101. An audio source 101-n may be provided, for example, as a respective audio capturing device such as a microphone or a microphone array. In another example, each of the one or more audio sources 101 may be provided as a microphone of a microphone array. Each of the one or more audio sources 101 operates to record a respective audio source signal at its location. The respective audio source signals captured at the one or or more audio sources 101 hence provide respective one or more 'views' to the sound field in the target location.

Each of the one or more audio sources 101 may provide the respective audio source signal to the audio server 102 via a wired connection, a wireless connection or a combination of a wired and wireless connection. As non-limiting examples, an audio source 101-n may be connected to the audio server 102 via a dedicated wired or wireless link or via a communication network.

Each of the one or more audio sources 101 is associated with a respective audio source location indication that defines the location of respective audio source 101-n. In an example, an indication of the audio source location for an audio source 101-n is provided as predefined information that may be stored at the audio server 102 upon arranging the audio source 101-n it its desired position at or in proximity of the target location. In another example, an indication of the audio source location for an audio source 101-n is provided from the audio source 101-n to the audio server 102 together with the audio source signal recorded at the audio source 101-n. In a further example, an indication of the audio source location for the audio source 101-n is provided to the audio server 102 separately from the audio source signal recorded at the audio source 101-n (e.g. as out-of-band information). An audio source signal originating from an audio source 101-n and the audio location indication for the audio source 101-n may be jointly referred to as audio source data for the audio source 101-n or as audio source data pertaining to the audio source 101-n. The one or more audio sources 101 may be also referred to as respective primary audio sources and audio source data for an audio source 101-n may be referred to as primary audio source data for the (primary) audio source 101-n.

The audio/video recording arrangement 100 may further include one or more secondary audio sources arranged in respective desired positions at or in proximity of the target location. The secondary audio source(s) may be similar to the audio sources 101 described in the foregoing with the exception that no audio source location indications are provided for the further audio source(s) and hence audio data for a secondary audio source includes only an audio source signal originating from the respective secondary audio source.

Each of the one or more user devices 103 may comprise respective wireless communication means that allows establishing a connection with the audio server 102. As an example, a communication means provided in a user device 103-m may enable short-range wireless communication to an access point, which is connected to the audio server 102 via a communication network. Any suitable short-range wireless communication technique may be applied. Non-limiting examples in this regard, include wireless local area network (WLAN) technology defined e.g. in IEEE 801.11 series of standards (where the acronym IEEE stands for the Institute of Electrical and Electronics Engineers) and Bluetooth technology defined e.g. in Bluetooth Core Specification v 5.0.

The connection to the audio server 102 enables the user device 103-m exchanging information with the audio server 102. This connection may be employed, for example, to transfer an audio steam and/or control information related to the audio stream between the audio server 102 and the user device 103-m. The audio content may comprise, for example, the respective audio source data for the one or more audio sources 101 or an audio stream derived in the audio server 102 on basis of the respective audio source data for the one or more audio sources 101.

Each of the one or more user devices 103 comprises respective imaging means or imaging device and it may comprise respective audio capturing means. The imaging means may comprise, for example, a (video) camera module whereas the audio capturing means may comprise e.g. a microphone or a microphone array. Moreover, a user device 103-m further comprises a user-operable media capturing application that may be applied to control the imaging means to record a video stream. If the user device 103-m is provided with the audio capturing means, the user-operable media capturing application may be applied to control the audio capturing means and the imaging means in the user device 103-m to simultaneously record, respectively, an audio stream and a video stream and provide the recorded audio and video streams as a time synchronized audio-visual stream. The audio stream recorded by the audio capturing means of the user device 103-m may be referred to as a local audio stream. The recorded video stream or audio-visual stream may be stored at the user device 103-m for subsequent viewing therein and/or the recorded video stream or audio-visual stream may be transmitted or streamed to another device for viewing therein.

The one or more user devices 103 comprise respective mobile devices and hence their location and/or orientation with respect to the target location may change over time along with movement of the user. As a few non-limiting examples, a user device 103-m may comprise a mobile phone, a smartphone, a tablet computer, a video camera, a media player, etc. In particular, a change in location and/or orientation of a user device 103-m with respect to the target location typically also results in a change in location and/or orientation of the imaging means provided therein, thereby causing a change in the field of in video stream captured by the imaging means. The movement of the user device 103-m along with the user movement may affect also characteristics of the recorded audio stream due to changes is relative position and/or orientation of the audio capturing means with respect to the target location. Consequently, the resulting audio quality may be less than satisfactory due to undesired and even unexpected changes of position and/or orientation.

Each of the one or more user devices 103 comprises respective positioning means that enable determining location and orientation of the respective user device 103. As an example, the positioning means in a user device 103-m may comprise satellite-based positioning means making use of a technology such as Global Positioning System (GPS) or Glonass for determining the location of the user device 103-m and the imaging means therein. Additionally or alternatively, the positioning means may make use of an indoor positioning system (IPS) known in the art for determining the location of the user device 103-m. In an example, the positioning means in the user device 103-m may further include an accelerometer arranged to (track and) determine the orientation of the user device 103-m and hence the orientation of the imaging means therein. The positioning means may hence be employed to determine the position and/or orientation of the user device 103-m and to derive a position indication for the user device 103-m, which position indication indicates the current location and orientation of the user device 103-m and the imaging means therein.

The respective audio source data provided for the one or more audio sources 101 may be applied together with position indication derived for a user device 103-m to generate a spatial audio stream for the user device 103-m. The spatial audio stream conveys a sound field that includes one or more directional sound components and an ambient sound component. Typically, the directional sound components represent respective sound sources of the sound field that have a predefined direction of arrival with respect to the listener of the audio stream, whereas the ambient component represents environmental noises and other non-directional sounds that constitute an 'audio background' of the sound field. In general, a directional sound component may be provided by reproducing the same or similar audio signal at two or more channels of an audio stream such that they exhibit an inter-channel time difference and/or inter-channel level difference that correspond to its desired position in space, which models a real-world reception of human hearing where the two ears receive a sound originating from the environment of the listener at slightly different times and/or at slightly different magnitudes in dependence of the position of the sound source. Capturing, creation and reproduction of such spatial audio streams and suitable audio formats are well known in the art and therefore further details of a spatial audio stream are not described in this disclosure.

In this regard, the audio source signal and the associated audio location indication provided in the audio source data for an audio source 101-n and the position indication derived for a user device 103-m may be applied to generate a directional sound component in the spatial audio stream such that the directional sound component created on basis of the audio source signal of the audio source 101-n is arranged in a spatial position of sound field that corresponds to the real-world positions of the audio source 101-n in relation to the location and orientation of the imaging means of the user device 103-m. In addition to the directional sound component generated based on the audio source signal of the audio source 101-n, respective directional sound component may be created for one or more other audio sources 101 on basis of the audio source data provided therefor and the position indication for the user device 103-m. Moreover, the ambient sound component may be generated on basis of the audio sources signals of the audio sources 101 and/or on basis of audio source signals of one or more secondary audio sources (if available). Both the directional sound component(s) and the ambient sound component may be created using spatial audio processing techniques known in the art.

The spatial audio stream generated for the user device 103-m on basis of the audio source data obtained via the audio server 102 serves to provide an alternative for the local audio stream that (is being) substantially simultaneously recorded by the audio capturing means of the user device 103-m. In this regard, the spatial audio stream that is based on audio signals captured at or in proximity of the target location and that further takes into account the location and orientation of the imaging means of the user device 103-m in relation to the respective locations of the one or more audio sources 101 provides a significantly improved audio quality in comparison to the local audio stream recorded by the audio capturing means of the user device 103-m. In an example, when the spatial audio stream is available for the user device 103-m, the user-operable media capturing application in the user device 103-m may be arranged to discontinue recording of the local audio stream and combine the spatial audio stream generated for the user device 103-m with the video stream (being) recorded by the imaging means of the user device 103-m to provide the audio-visual stream. In another example, when the spatial audio stream is available for the user device 103-m, the user-operable media capturing application in the user device 103-m may be arranged to continue recording of the local audio stream and generating the audio-visual stream as a combination of the local audio stream and the video stream, whereas the local audio stream in the audio-visual stream is (subsequently) replaced with the spatial audio stream generated for the user device 103-m.

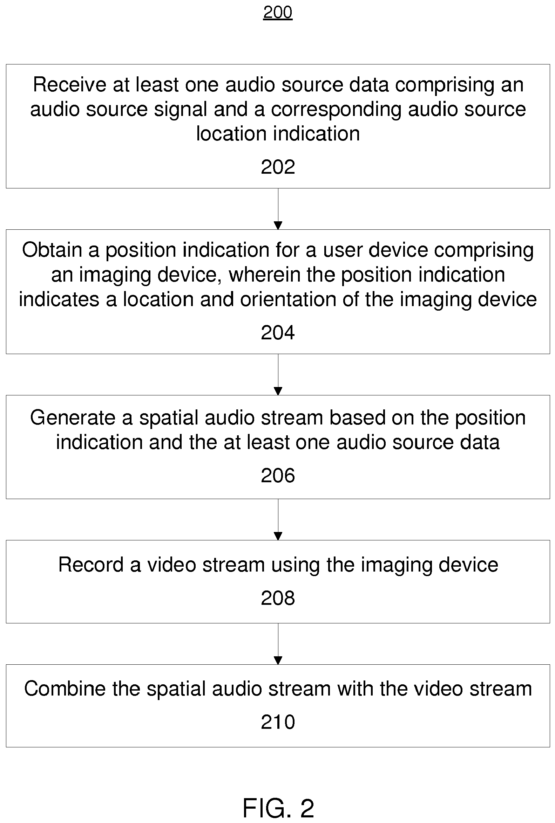

Some aspects of the audio/video recording arrangement 100 described above may be applied to provide a method 200 illustrated by the flowchart depicted in FIG. 2. The method 200 comprises receiving at least one audio source data comprising an audio source signal and a corresponding audio source location indication, as indicated in block 202. The method 200 further comprises obtaining a position indication for a user device 103-m comprising an imaging device, wherein the position indication indicates a location and orientation of the imaging device, as indicated in block 204, and generating a spatial audio stream based on the position indication and the at least one audio source data, as indicated in block 206. The method 200 further comprises recording a video stream using the imaging device, as indicated in block 208, and combining the spatial audio stream with the video stream, as indicated in block 210.

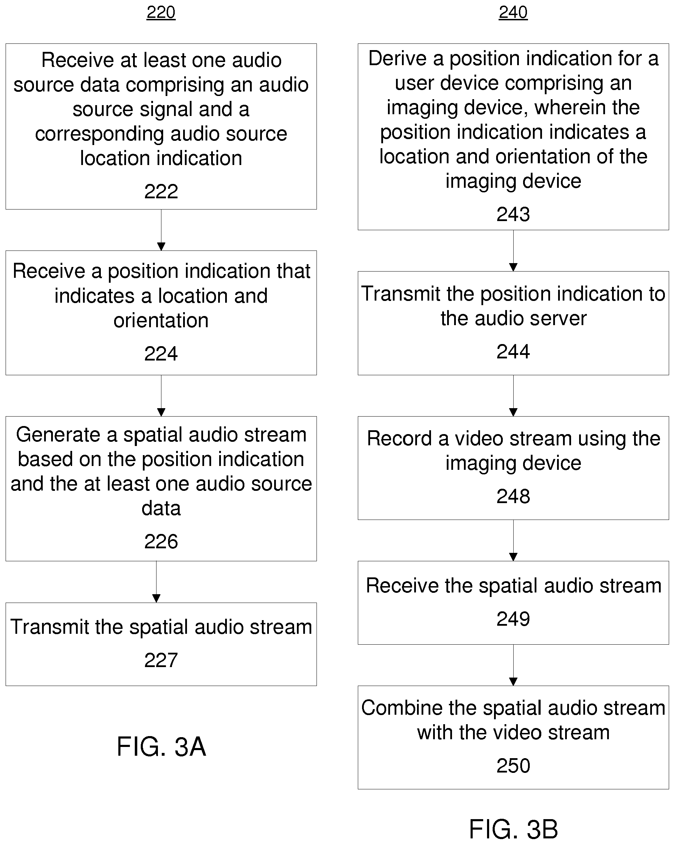

The method 200 may be implemented using the elements of the audio/video arrangement 100 in a number of ways, for example according to the non-limiting examples described in the following. As a first example in this regard, FIG. 3A depicts a flowchart that illustrates a method 220 that may be carried out in the audio server 102, whereas FIG. 3B depicts a flowchart that illustrates a method 240 that may be carried out in the user device 103-m. The methods 220 and 240 may be carried out in parallel, respectively, by the audio server 102 and the user device 103-m.

In the method 220, the audio server 102 receives at least one audio source data comprising an audio source signal and a corresponding audio source location indication (block 222). In the course of the method 240, the user device 103-m derives the position indication that indicates the location and orientation of the imaging means in the user device 103-m (block 243) and transmits the derived position indication to the audio server 102 (block 244). Referring back to the method 220, the audio server 102 receives the position indication from the user device 103-m (block 224), generates the spatial audio stream based on the position indication and the at least one audio source data (block 226), and transmits the generated spatial audio stream to the user device 103-m (block 227). Referring back to the method 240, the user device 103-m records a video stream using the imaging means included therein (block 248), receives the spatial audio stream from the audio server 102 (block 249), and combines the spatial audio stream received from the audio server 102 with the video stream recorded in the user device 103-m (block 250).

Once initiated, the audio server 102 and the user device 103-m may be arranged to repeatedly carry out respective one of the methods 220, 240, thereby enabling the audio server 102 to reflect the possible changes in location and orientation of the user device 103-m and the imaging means therein and/or possible changes in locations of the one or more audio sources 101 to the spatial audio stream.

Before or in the course of the method 220 the audio server 102 may transmit to the user device 103-m an explicit indication regarding the possibility to receive the spatial audio signal from the audio server 102. Such an indication may be transmitted, for example, before (repeatedly) carrying out operations pertaining to blocks 222 to 227 of the method 220. The user device 103-m may respond to above-described indication by transmitting and explicit response to the audio server 102 to request reception of the spatial audio signal therefrom. According to an example, a response that requests reception of the spatial audio signal from the audio server 102 may involve a dedicated message, while according to another example the response that requests transmission of the spatial audio signal involves first transmission of the position indication from the user device 103-m to the audio server 102 (cf. block 244). The request may initiate (repeated) implementation of operations pertaining to blocks 222 to 227 in the audio server 102.

The audio server 102 and the user device 103-m may exchange timing information in the course of operating thee methods 220 and 240. The timing information enables time synchronization between the spatial audio stream generated in the audio server 102 and the video stream recorded in the user device 103-m. The timing information may comprise a sequence of server timestamps. As a non-limiting example in this regard, the audio server 102 may transmits the spatial audio stream 102 arranged in a sequence of frames that each represent a predefined segment of the audio stream (e.g. 20 milliseconds), generate for each frame a server timestamp that indicates the starting time of the respective frame of the generated spatial audio stream according to a local clock in the audio server 102, and transmits at least some of the frames with the server timestamp generated therefor. Hence, the server timestamp received at the user device 103-m indicates the timing of the corresponding frame within the spatial audios stream. An example of such usage of timestamps is described e.g. in the real-time transport protocol (RTP) specification RFC 3550. Moreover, the audio server 102 and the user device 103-m may employ the RTP for transfer of the spatial audio stream from the audio server 102 to the user device 103-m.

In parallel, the user device operates to generate corresponding sequence of client timestamps, where each client timestamp indicates the starting time of a respective frame of the recorded video stream according to a local clock in the user device 103-m. Consequently, the user device 103-m may time-synchronize the spatial audio stream received from the audio server 102 with the video stream recorded in the user device 103-m by using the received server timestamps and the locally-generated client timestamps. Reliable time synchronization may require synchronization of the respective local clocks in the audio server 102 and the user device 103-m or at least predefined knowledge between possible time difference between the respective local clocks in the audio server 102 and the user device 103-m. The local clocks may be synchronized, for example, via usage of a suitable clock synchronization protocol known in the art, such as the network time protocol (NTP) specified in the RFC 5905, the precision time protocol (PTP) specified e.g. in the IEEE 1588-2002 standard or the IEEE 1588-2008 standard or a GPS based clock synchronization. Possible clock synchronization is typically carried out before (repeatedly) carrying out operations pertaining to blocks 222 to 227 of the method 220 and to block 243 to 250 of the method 240.

In another example, the time synchronization between the spatial audio stream received from the audio server 102 and the video stream recorded in the user device 103-m may be provided by comparing the audio signal content in (at least one channel of) the received spatial audio stream to that of the local audio stream recorded in the user device 103-m: the comparison may be carried out to identify a time delay between the received spatial audio stream and the local audio stream, e.g. by identifying a time delay that maximizes correlation between the spatial audio stream and the local audio stream or by identifying the time delay between corresponding peak values in respective waveforms of the spatial audio stream and the local audio stream. The identified time delay may be applied in combining the received spatial audio stream with the recorded video stream in the user device 103-m (block 250) e.g. by delaying the video stream with respect to the spatial audio stream or vice versa, depending on the 'direction' of the identified time delay.

In a further example, the time synchronization between the spatial audio stream received from the audio server 102 and the video stream recorded in the user device 103-m may be provided by using a technique described in the US patent no. 9,826,491.

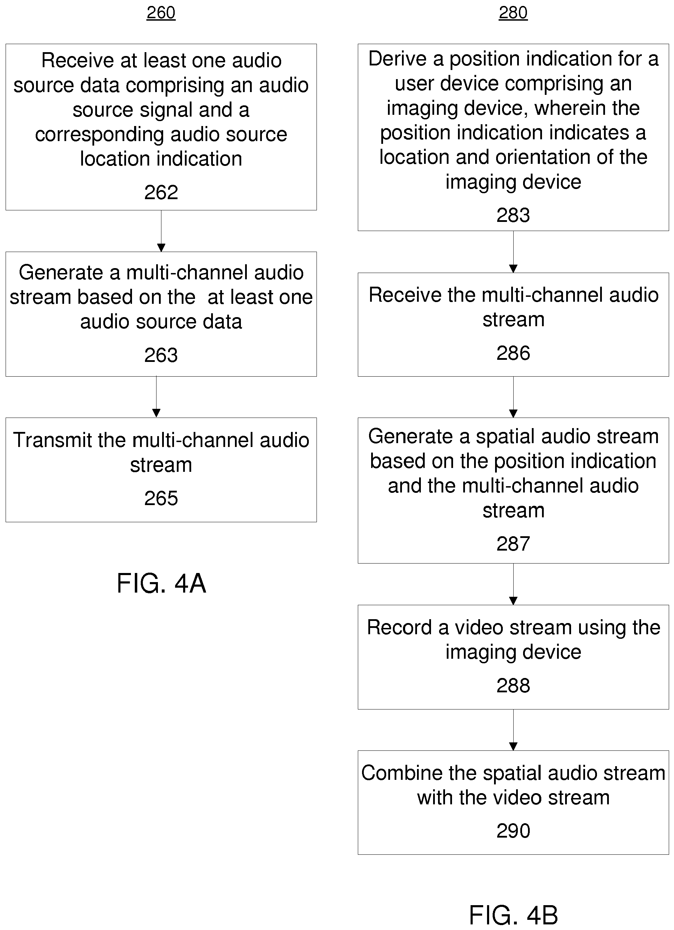

As a second example of implementing the method 200 using the elements of the audio video recording arrangement 100, FIG. 4A depicts a flowchart that illustrates a method 260 that may be carried out in the audio server 102, whereas FIG. 4B depicts a flowchart that illustrates a method 280 that may be carried out in the user device 103-m. The methods 260 and 280 may be carried out in parallel, respectively, by the audio server 102 and the user device 103-m.

In the method 260, the audio server 102 receives at least one audio source data comprising an audio source signal and a corresponding audio source location indication (block 262). In the course of the method 280, the user device 103-m derives the position indication that indicates the location and orientation of the imaging means in the user device 103-m (block 283). Referring back to the method 260, the audio server 102 generates a multi-channel audio stream based on the at least one audio source data (block 263) and transmits the generated multi-channel audio stream to the user device 103-m (block 265). The multi-channel audio stream includes the audio source locations indications or derivatives thereof to enable generation of a spatial audio stream in the user device 103-m. Referring back to the method 280, the user device 103-m receives the multi-channel audio stream from the audio server 102 (block 286) and generates the spatial audio stream on basis of the position indication and the received multi-channel audio stream (block 287). The user device 103-m further records a video stream using the imaging means included therein (block 288) and combines the generated spatial audio stream with the video stream recorded in the user device 103-m (block 290).

Once initiated, the audio server 102 and the user device 103-m may be arranged to repeatedly carry out respective one of the methods 260, 280, thereby enabling the audio server 102 to reflect possible changes in locations of the one or more audio sources 101 to the multi-channel audio stream transmitted from the audio server 102 to the user device 103-m.

Before or in the course of the method 260 the audio server 102 may transmit to the user device 103-m an explicit indication regarding the possibility to receive the spatial audio signal from the audio server 102. Such an indication may be transmitted, for example, before (repeatedly) carrying out operations pertaining to blocks 262 to 265 of the method 260. Along the lines described in the foregoing for the methods 220 and 240, the user device 103-m may respond to above-described indication by transmitting and explicit response to the audio server 102 to request reception of the multi-channel audio signal therefrom. According to an example, a response that requests reception of the multi-channel audio signal from the audio server 102 may involve a dedicated message. The request may initiate (repeated) implementation of operations pertaining to blocks 262 to 265 in the audio server 102.

The audio server 102 and the user device 103-m may exchange timing information in the course of operating the methods 260 and 280. In this regard, the generation of the server timestamps and the client timestamps as well as transmission of the server time timestamps may be provided in a manner described in the foregoing in context of the methods 220 and 240 with the exception that herein the server timestamps pertain to the multi-channel audio stream transmitted from the audio server 102 to the client device 103-m and that the possible clock synchronization is typically carried out before (repeatedly) carrying out operations pertaining to blocks 262 to 265 of the method 260 and to block 283 to 290 of the method 280. Along similar lines, time synchronization between the spatial audio stream and the video stream may be provided in a manner described in the foregoing in context of the methods 220 and 240 with the exception that herein the comparison may be carried out between (at least one channel of) the received multi-channel audio stream and the local audio stream or between the spatial audio stream generated in the user device 103-m and the local audio stream.

As a further example of implementing the method 200 using the elements of the audio video recording arrangement 100, the operation according to the methods 220 and 240 may be varied in such a manner that the user device 103-m transmits the video stream captured therein to the audio server 102, which combines the spatial audio stream created therein to the video stream received from the user device 103-m to create an audio-visual stream. Consequently, in this variation operations corresponding to block 250 are carried out in the audio server 102, operations corresponding to block 227 involve transmission of the audio-visual stream to the user device 103-m, and operations corresponding to block 249 involve reception of the audio-visual stream.

A user interface (Ul) of the user-operable media capturing application in the user-device 103-m may provide the user with an indication of availability of the spatial audio stream and/or the multi-channel audio stream in the audio server 102. This may be carried out, for example, in context of carrying out the method 200, e.g. via implementation of the methods 220 and 240 or the methods 260 and 280. As an example, the user-operable media capturing application may provide in the UI an indication of availability of the spatial audio stream and/or the multi-channel audio stream from the audio server 102 and a possibility to request reception of the spatial audio stream and/or the multi-channel audio stream from the audio server 102.

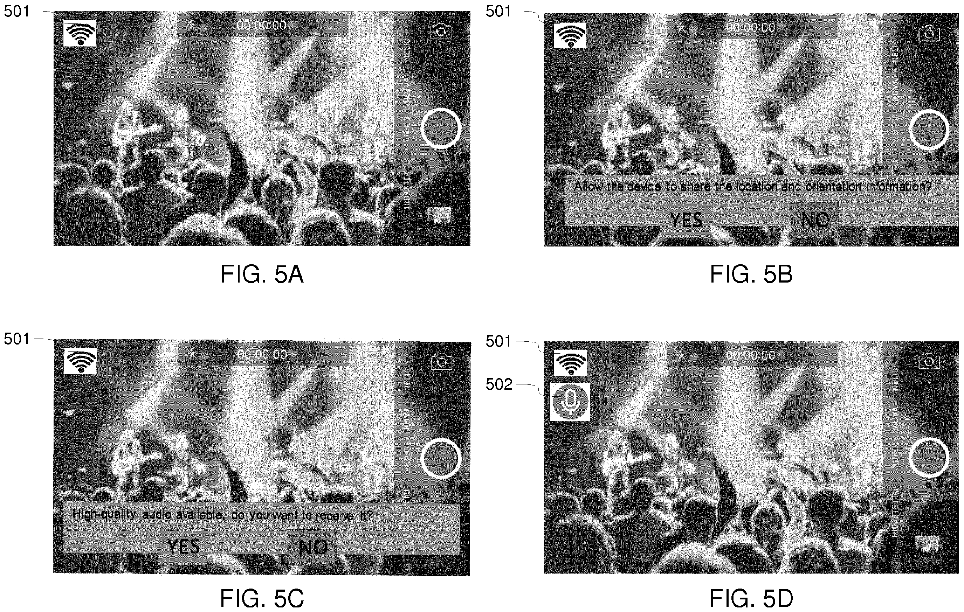

A non-limiting example in this regard is provided via FIGS. 5A to 5D, where the user is provided with a possibility to receive the spatial audio stream from the audio server 102. FIG. 5A illustrates a visual component of the UI of the user-operable media capturing application while the user is recording the video stream together with the local audio stream. In the example FIG. 5A, the UI shows e.g. the current field of view of the imaging means in the user device 103-m and a first symbol 501 overlaid thereon, where the first symbol 501 serves to indicate existence of the wireless connection to the audio server 102 (e.g. a WLAN connection).

In response to receiving, from the audio server 102, an indication regarding the possibility to receive the spatial audio signal from the audio server 102, the media capturing application causes the UI prompt the user to accept or decline sharing of the position indications derived therefor with the audio server 102 to enable generation of the spatial audio signal therein. An example in this regard is illustrated in FIG. 5B. In response to receiving an indication of a user declining to share the position indications, the recording of the video stream and the local audio stream is continued as usual. In response to receiving an indication of the user accepting to share the position indications, the procedure continues into causing the UI to prompt the user to accept or decline reception of the spatial audio stream from the audio server 102, e.g. according to an example depicted in FIG. 5C.

In response to receiving an indication of a user declining to receive the spatial audio stream, the recording of the video stream and the local audio stream is continued as usual. In response to receiving an indication of the user accepting to receive the spatial audio stream from the audio server 102, the procedure may continue into the user device 103-m transmitting to the audio server 102 the request to receive the spatial audio signal therefrom. Transmission of the request, in turn results in generation of the spatial audio stream for the user device 103-m in the audio server 102 and the user-device 103-m initiating transmission of the position indications to the audio server 102, receiving the spatial audio stream from the audio server 102 and combining received spatial audio stream 102 with the video stream recorded in the user device 103-m, e.g. in accordance with the methods 220 and 240 described in the foregoing. FIG. 5D illustrates an example of this phase of operation, showing the UI with a second indication 502 that indicates that the spatial audio stream is being received from the audio server 102.

While the example described in the foregoing via references to FIGS. 5A to 5D concerns the user device 103-m receiving the spatial audio signal from the audio server 102, a variation of this example may be applied to receive the multi-channel audio stream from the audio server 102. In such a variation the step of prompting the user for accepting or declining sharing of the position indications derived therefor with the audio server 102 can be omitted and hence the process may move from the phase illustrated in FIG. 5A to that illustrated in FIG. 5C in response to the user device 103-m receiving from the audio server 102 an indication regarding the possibility to receive the multi-channel audio signal from the audio server 102. Consequently, the user's acceptance to receive the multi-channel audio stream from the audio server 102 results in the audio server 102 generating the multi-channel audio stream and transmitting it to the user device 103-m, the user-device 103-m receiving the multi-channel audio stream from the audio server 102, generating the spatial audio signal on basis of the received multi-channel audio stream and position indications derived in the user device 103-m, and combining generated spatial audio stream 102 with the video stream recorded in the user device 103-m, e.g. in accordance with the methods 260 and 280 described in the foregoing. Hence, in this variation the second indication 502 serves to indicate the user device 103-m being in receipt of the multi-channel audio signal from the audio server 102.

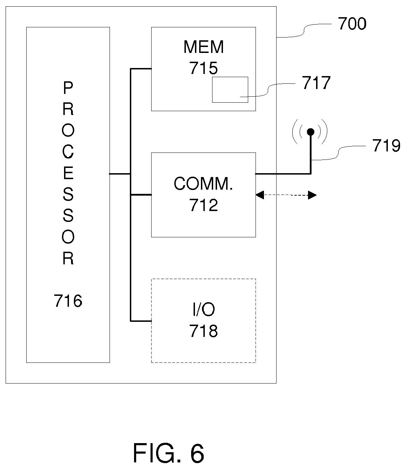

FIG. 6 illustrates a block diagram of some components of an exemplifying apparatus 700. The apparatus 700 may comprise further components, elements or portions that are not depicted in FIG. 5. The apparatus 700 may be employed e.g. in implementing the audio server 102 or the user device 103-m described in the foregoing.

The apparatus 700 comprises a processor 716 and a memory 715 for storing data and computer program code 717. The memory 715 and a portion of the computer program code 717 stored therein may be further arranged to, with the processor 716, to implement the function(s) described in the foregoing in context of the audio server 102 or the user device 103-m.

The apparatus 700 comprises a communication portion 712 for communication with other devices. The communication portion 712 comprises at least one communication apparatus that enables wired or wireless communication with other apparatuses. A communication apparatus of the communication portion 712 may also be referred to as a respective communication means. As a non-limiting example, a communication apparatus that enables wired communication may provide communication according to universal serial bus (USB) standard. As further non-limiting examples, a communication apparatus that enables wireless communication may provide at least one of the following interfaces: a WLAN interface, low-power RF interface (such as Bluetooth BR/EDR or Bluetooth Low Energy), positioning receiver such as a GPS receiver or a Glonass receiver, a cellular interface according to one of the following: a Global System for Mobile Communications (GSM), 3G, 4G, long term evolution (LTE). A wireless communication apparatus, if present in the communication portion 712, is provided with one or more antennas 719.

The apparatus 700 may further comprise user I/O (input/output) components 718 that may be arranged, possibly together with the processor 716 and a portion of the computer program code 717, to provide a user interface for receiving input from a user of the apparatus 700 and/or providing output to the user of the apparatus 700 to control at least some aspects of operation of the audio server 102 or the user device 103-m implemented by the apparatus 700. The user I/O components 718 may comprise hardware components such as a display, a touchscreen, a touchpad, a mouse, a keyboard, an arrangement of one or more keys or buttons, one or more microphones, one or more loudspeakers, a gyroscope, an accelerometer, etc. The user I/O components 718 may be also referred to as peripherals. The processor 716 may be arranged to control operation of the apparatus 700 e.g. in accordance with a portion of the computer program code 717 and possibly further in accordance with the user input received via the user I/O components 718 and/or in accordance with information received via the communication portion 712.

Although the processor 716 is depicted as a single component, it may be implemented as one or more separate processing components. Similarly, although the memory 715 is depicted as a single component, it may be implemented as one or more separate components, some or all of which may be integrated/removable and/or may provide permanent / semi-permanent/ dynamic/cached storage.

The computer program code 717 stored in the memory 715, may comprise computer-executable instructions that control one or more aspects of operation of the apparatus 700 when loaded into the processor 716. As an example, the computer-executable instructions may be provided as one or more sequences of one or more instructions. The processor 716 is able to load and execute the computer program code 717 by reading the one or more sequences of one or more instructions included therein from the memory 715. The one or more sequences of one or more instructions may be configured to, when executed by the processor 716, cause the apparatus 700 to carry out operations, procedures and/or functions described in the foregoing in context of the audio server 102 or the user device 103-m.

Hence, the apparatus 700 may comprise at least one processor 716 and at least one memory 715 including the computer program code 717 for one or more programs, the at least one memory 715 and the computer program code 717 configured to, with the at least one processor 716, cause the apparatus 700 to perform operations, procedures and/or functions described in the foregoing in context of the audio server 102 or the user device 103-m.

The computer programs stored in the memory 715 may be provided e.g. as a respective computer program product comprising at least one computer-readable non-transitory medium having the computer program code 717 stored thereon, the computer program code, when executed by the apparatus 700, causes the apparatus 700 at least to perform operations, procedures and/or functions described in the foregoing in context of the audio server 102 or the user device 103-m. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, microcontrollers, etc.

Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A method comprising
obtaining a position indication for a user device comprising an imaging device, wherein the position indication indicates a location and orientation of the imaging device;
receiving at least one audio source data comprising an audio source signal and a corresponding audio source location indication;
generating a spatial audio stream based on the position indication and the at least one audio source data;
recording a video stream using the imaging device; and
combining the spatial audio stream with the video stream.

2. A method according to claim 1, comprising
deriving the position indication in the user device and transmitting the derived position indication to an audio server;
receiving, in the audio server, the position indication from the user device and the at least one audio source data;
generating, in the audio server, the spatial audio stream for the user device based on the position indication and the at least one audio source data;
transmitting the generated spatial audio stream from the server device to the user device; and
recording the video stream using the imaging device and combining the received spatial audio stream with the video stream in the user device.

3. A method according to claim 1, comprising
deriving the position indication in the user device;
generating, in the audio server, the multi-channel audio stream based on the at least one audio source data and transmitting the generated multi-channel audio stream from the server device to the user device;
generating, in the user device, the spatial audio stream for the user device based on the position indication and the received multi-channel audio stream; and
recording the video stream using the imaging device and combining the generated spatial audio stream with the video stream in the user device.

4. A method comprising
deriving a position indication for a user device comprising an imaging device, wherein the position indication indicates a location and orientation of the imaging device;
transmitting the position indication to a server device;
receiving, from the server device, a spatial audio stream derived at least in part based on the position indication;
recording a video stream using the imaging device; and
combining the received spatial audio stream with the video stream.

5. A method according to claim 4, comprising
receiving an indication regarding an availability of the spatial audio stream in the audio server;
receiving, via a user interface, an indication of a user accepting reception of the spatial audio stream from the audio server; and
transmitting, to the audio server, a request to receive the spatial audio stream.

6. A method according to any of claims 1 to 5, wherein the spatial audio stream received from the audio server comprises server timestamps and the video stream comprises client timestamps, the method comprising time synchronizing the audio stream and the video stream on basis of the server timestamps and client timestamps.

7. A method according to any of claims 1 to 6, wherein the spatial audio stream comprises a spatial audio signal that includes one or more directional sound components created on basis of respective one or more audio source signals arranged in spatial positions of a sound field that correspond to real-world positions of said one or more audio sources in relation to the location and orientation indicated by the position indication.

8. A computer program comprising computer readable program code configured to cause performing of the method of any of claims 1 to 7 when said program code is run on one or more computing apparatuses.

9. A system comprising
means for obtaining a position indication for a user device comprising an imaging device, wherein the position indication indicates a location and orientation of the imaging device;
means for receiving at least one audio source data comprising an audio source signal and a corresponding audio source location indication;
means for generating a spatial audio stream based on the position indication and the at least one audio source data;
means for recording a video stream using the imaging device; and
means for combining the spatial audio stream with the video stream.

10. A system according to claim 9, comprising
means for deriving, in the user device, the position indication and transmitting the position indication to an audio server;
means for receiving, in the audio server, the position indication from the user device and the at least one audio source data;
means for generating, in the audio server, the spatial audio stream for the user device based on the position indication and the at least one audio source data;
means for transmitting, in the audio server, the generated spatial audio stream to the user device;
means for recording, in the user device, the video stream using the imaging device; and
means for combining, in the user device, the received spatial audio stream with the video stream.

11. A system according to claim 9, comprising
means for deriving, in the user device, the position indication;
means for generating, in the audio server, the multi-channel audio stream based on the at least one audio source data;
means for transmitting, in the audio server, the generated multi-channel audio stream to the user device;
means for generating, in the user device, the spatial audio stream for the user device based on the position indication and the received multi-channel audio stream;
means for recording, in the user device, the video stream using the imaging device; and
means for combining, in the user device, the generated spatial audio stream with the video stream.

12. An apparatus comprising
an imaging device;
means for deriving a position indication for the apparatus, wherein the position indication indicates a location and orientation of the imaging device;
means for transmitting the position indication to a server device;
means for receiving, from the server device, a spatial audio stream derived at least in part based on the position indication;
means for recording a video stream using the imaging device; and
means for combining the received spatial audio stream with the video stream.

13. An apparatus according to claim 12, comprising
means for receiving an indication regarding an availability of the spatial audio stream in the audio server;
means for receiving, via a user interface of the apparatus, an indication of a user accepting reception of the spatial audio stream from the audio server; and
means for transmitting, to the audio server, a request to receive the spatial audio stream.

14. An apparatus according to claim 12 or 13, wherein the spatial audio stream received from the audio server comprises server timestamps and the video stream comprises client timestamps, the method comprising time synchronizing the audio stream and the video stream on basis of the server timestamps and client timestamps.

15. An apparatus according to any of claims 12 to 14, wherein the spatial audio stream comprises a spatial audio signal that includes one or more directional sound components created on basis of respective one or more audio source signals arranged in spatial positions of a sound field that correspond to real-world positions of said one or more audio sources in relation to the location and orientation indicated by the position indication.
